# EUROPEAN PATENT APPLICATION

(11) **EP 4 019 481 A1**
(43) Date of publication of application: **29.06.2022**
(21) Application number: 20290090.8
(22) Date of filing: 22.12.2020
(51) Int. Cl.: C04B 28/06, C04B 7/32

(54) **BINDER COMPOSITION FOR THE PRODUCTION OF METAL ORE PELLETS, METHOD FOR THE PRODUCTION OF THE PELLETS AND METAL ORE PELLET**

(71) Applicant: Holcim Technology Ltd, 5113 Holderbank (CH)
(72) Inventor: BROUARD, Eric, 38300 Meyrié (FR); CREYX, Antoine, 38090 Villefontaine (FR); DARONNAT, Sophie, 69620 Sainte Paule (FR); VERT, Clément, 69100 Villeurbanne (FR)
(74) Representative: HGF

(57) **Abstract**

The invention relates to a binder composition for the cold forming of metal ore pellets, wherein the binder composition comprises a hydraulic binder component and additives, wherein the hydraulic binder component has a fineness of at least D95 < 40 µm, D50 < 12 µm, D10< 5 µm (determined by laser diffraction particle size analyzer) with a Blaine fineness between 6500 and 9000 cm²/g wherein the CaO content is > 62,5 wt.-% and the content of C3S is > 60 wt.-%, preferably >65 wt.-%.

## Description

The invention relates to a binder composition for the production of metal ore pellets, a method for the production of the metal ore pellets and metal ore pellets.

Ore in small particle sizes, such as ground ore, ore in the form of powder or as a concentrate cannot be processed in metallurgical processes e.g. a blast furnace, direct reduction and the like.

In general, for metallurgical processing of ore, for example metallurgical processing of ore into a liquid metal or by direct reducing, gas flow between the particles is required. A suitable low flow resistance has to be ensured. Therefore, it is well known to increase the size of the particles by e.g. pelletising the ore into pellets with a suitable size or by sintering ore to increase the particle size.

In blast furnaces massive pressure is exerted to the weight of the bulk and therefore on the pellets due to the height of the furnace. Further, pellets are exposed to friction and abrasion as well as compression during transport and handling.

Therefore pellets having a sufficient compressive strength are required.

It is known to sinter ore particles into larger particles suitable for further processing. Sintering is a very energy consuming process normally with the need to use additional coke. This causes the release of greenhouse gases.

In a conventional pyrometallurgical process, ore is pelletized by partial melting. This method has the disadvantage of requiring additional energy before the ore is actually processed to extract the desired metal.

Cold pelletisation processes are known and used in the industry. Pellets are produced using different types of binders. The use of Portland cement for the pelletisation of ore is known, as well as the benefit of using a finer Portland cement to increase the strength of the pellets. A main limitation of these processes is that the compression strength of the pellets can decrease with the time, and might not be sufficient to support the handling of the pellets. These pellets are then likely to be crushed during the handling, prior to the metallurgical processing, and in the metallurgical process itself.

High alumina cements, such as calcium aluminate cements or calcium sulfoaluminate cements are also used for the production of pellets. However, these binders are very expensive.

Further, it is known to increase the compression strength of ore pellets which are made with hydraulic binders by curing the pellets. For example, the curing of pellets in a saturated gas stream that contains high levels of CO₂ is known to increase the strength of the pellets. It is also considered as an effective means to achieve the desired strength and also a way of using CO₂-containing waste gases. Further, curing methods introducing saturated steam treatments in autoclaves are known.

In addition, curing at moderate temperatures in steam saturated gas to increase the cold strength of the pellets or to reduce the curing time is known.

SU 562580 pertains to the preparation of fluxed iron ore non fired pellets and describes mixing iron ores with hydraulic cement and catalysts, wherein the cement is an alite based cement with more than 50% alite wherein Calcium and Barium chlorides are used besides alumina cement as catalyst. After pelletizing, the mixture is cured at 150 to 180°C for 2 hours and then heated to 250°C under normal atmosphere. Compression strengths of above 200 kg/pellet or 2000 N can be achieved this way.

US 3676104 describes a binder for the production of pellets consisting of blast furnace slag and Portland cement. Besides ore 5% cement and 10% blast furnace slag are present. The pellets are cured in a steam autoclave.

WO 2019/033187 relates to a method of cold forming pellets from iron ore with a grain size up to 0.8 mm with very fine particles and cement with a grain size of 98% under 44 µm.

From GB 1 445 792 it is known to mix 60 to 98% iron ore with 2 to 40% of mixture comprising 15 to 95% cement and from 5 to 85% free iron containing powder.

Nowadays, iron ore pellets, to feed blast furnaces and DR reactors, are commonly produced by sintering or by firing pellets comprising binders such as organics or bentonite. In these two processes, the agglomeration process occurs by partial reduction and melting of iron oxides in the ores. This hardening process requires heavy equipment, a lot of fuel, energy and releases a large amount of greenhouse gas.

The object of the present invention is to provide a binder composition for pelletising metal ore which yields pellets with a sufficient compression strength.

The object is achieved by way of the binder composition of claim 1.

Embodiments are claimed in the claims which are dependent from claim 1.

It is a further object of the present invention to provide a method for producing metal ore pellets with a sufficient compression strength wherein the process is energy optimised.

The object is achieved by way of a method with the features of claim 8.

Embodiments are claimed in the claims which are dependent from claim 8.

It is a further object of the present invention to provide metal ore pellets with a sufficient compression strength for handling and processing. This object is achieved by metal ore pellets according to claim 15.

Percentages given below are wt.% unless otherwise indicated.

According to the present invention, a binder composition comprising a specific hydraulic binder leads to pellets with a sufficient compressive strength without additional energy consuming processing steps.

The invention significantly reduces the CO₂ emissions and energy consumption of iron ore pellets production. Further, according to the present invention simpler equipment is needed.

Contrary to experiences described in the state of the art, the compressive strength does not decrease but increases during the later stages of hydraulic reaction. Further, contrary to the common knowledge in the art it is not the fineness of the hydraulic binder alone which is responsible for a sufficient strength of the pellets. It was found that other criteria have to be met as well.

The hydraulic binder may be selected from any hydraulic binder having a fineness in the range of D95 < 40 µm, D50 < 12 µm, D10< 5 µm (determined by laser diffraction particle size analyzer) with a Blaine fineness between 6500 and 9000 cm²/g

Further, the content of CaO is preferably above 62.5 wt.-% and the content of C3S is > 60 wt.-%, preferably >65 wt.-%.In particular, it is advantageous if the hydraulic binder meets the following criteria: Al₂O₃ > 4 wt.-%; Fe₂O₃ < 3 wt.-%; SO₃ > 3.5 wt.-%; C3A > 2 wt.-% (By XRD-Rietveld analysis); C4AF < 11% wt.-% (By XRD- Rietveld analysis).

Besides the hydraulic binder the binder composition comprises additives. The additive can be one or more from the group comprising alkanolamines, gypsum, calcium aluminate cement, iron sulfate, calcium and magnesium chlorides, sodium sulfoaluminates, CSH seeds, carboxymethyl cellulose, carboxymethylhydroxyethylcellulose, vinyl copolymers, Sodium citrate, sodium gluconate, disodium salt of ethylenediamine tetra acetic acid, melamine and naphthalene formaldehyde condensates, Lignosulfonates, set retardants, superplasticizer, fluxes like finely ground limestone and/or dolomite.

It was found that the presence of an organic additive is advantageous and this organic additive may be selected from the group of alkanolamines.

Alkanolamines are chemical compounds that contain both hydroxyl (-OH) and amino (-NH₂, -NHR, and -NR₂) functional groups on an alkane backbone. The term alkanolamine is a broad class term. The alkanolaminesa are advantageously selected from the group comprising N,N bis-(2-hydroxyethyl)-2-propanolamine) (DIEPA), N, N bis-(2-hydroxypropyl)-N-(hydroxyethyl) amine (EDIPA), diethanolamine (DEA), triethanolamine (TEA), triisopropanolamine (TIPA), triethylenetetramine (TETA), triethylenepentamine (TEPA), hydroxyethyldiethylenetriamine (HEDETA), and aminoethylethanolamine (AEEA) and combinations thereof.

In particular tri-isopropanolamine, di-ethanol-isopropanolamine, or mixtures thereof may be used.

The alkanolamines may be added in amounts from 0.1 wt.-% to 1 wt.-% of the total binder composition.

Besides the alkanolamines, gypsum may further be added to the source of calcium sulfate which is part of the hydraulic binder. The amount added may be from 0.5 wt.-% to 10wt.-%.

The additive may comprise calcium aluminate cement wherein the aluminate cement may be any calcium aluminate cement, any calcium sulfoaluminate cement or any mixture thereof.

Calcium aluminate may be present in amounts between 2 wt-% 20 wt.-% based on total weight of the binder.

Iron sulfate may further be added as an additive as well, preferably in amounts of up to 5 wt.-% based on total weight of the hydraulic binder component.

Other suitable additives may be calcium and magnesium chlorides, sodium sulfoaluminates, CSH seeds, carboxymethyl cellulose, vinyl copolymers, and any mixture thereof.

Finely ground limestone and/or dolomite can be added to the binder as fluxes. The amount of added minerals will depend on the composition of the ore and the chemical composition of the cold bound pellets

In the claimed method, the fine ore may be mixed with the dry binder component. The binder component may optionally be added in an amount of 2 to 12 wt.-% of the total weight of the pellet, preferably in an amount of 4 to 8 wt.- % of the total weight of the dry pellet (ore + binder + optional additives).

The ore may preferably have a water content of 3 wt.-% to 15 wt.-%, based on the total weight of the ore.

The water contained in the ore may be used for the hydraulic reaction of the binder and for good adhesion of the binder particles to the ore particles.

If the ore has a water content below 3 wt.-%, water may be added. If the water content is higher than 15 wt.-%, the ore may be partially dried to the desired water content. The water content further may depend on the fineness of the binder as well as the ore.

If the ore has water content below the desired range, the binder composition may be added mixed with water and possibly further additives as a slurry. In case a slurry is added, set retardants, superplasticizer or other known additives like e.g. Sodium citrate, sodium gluconate, disodium salt of ethylenediamine tetra acetic acid, melamine and naphthalene formaldehyde condensates, Lignosulfonates, set retardants, superplasticizer may be added to adjust the setting, viscosity and the like.

The finer the ore and/or the binder the higher the amount of water needed to provide sufficient strength may be. The finer the ore the higher the amount of binder is required.

It was found to be advantageous that the minimum compressive strength is at least 1400N.

In a first aspect the invention relates to a binder composition wherein the hydraulic binder component has a fineness of at least D95 < 40 µm, D50 < 12 µm, D10< 5 µm (determined by laser diffraction particle size analyzer) with a Blaine fineness between 6500 and 9000 cm²/g and the CaO content is > 62.5 wt.-%, wherein the CaO content is > 62,5 wt.-% and the content of C3S is > 60 wt.-%, preferably >65 wt.-%.

In embodiments the hydraulic binder component comprises alkanolamines in an amount of 0.1 wt.-% to 1 wt-% and/or gypsum in amounts from 0.5 wt.-% to 10 wt.-% based on the weight of the total hydraulic binder component.

In embodiments the hydraulic binder is further characterized in that: Al₂O₃ > 4 wt.-%; Fe₂O₃ < 3 wt.-%; SO₃ > 3.5 wt.-%; C3A > 2 wt.-% (by XRD- Rietveld analysis); C4AF < 11% wt.-% (by XRD- Rietveld analysis).

In embodiments, wherein the binder composition comprises as an additive one or more from the group comprising alkanolamines, gypsum, calcium aluminate cement, iron sulfate, calcium and magnesium chlorides, any sodium sulfoaluminates, CSH seeds, carboxymethyl cellulose, carboxymethylhydroxyethylcellulose, any vinyl copolymers, Sodium citrate, sodium gluconate, disodium salt of ethylenediamine tetra acetic acid, melamine and naphthalene formaldehyde condensates, Lignosulfonates, set retardants, superplasticizer, CSH seeds, fluxes, or any mixture thereof.

In embodiments, the binder composition comprises aluminate cement, wherein the aluminate cement is optionally selected from any calcium aluminate cement, any calcium sulfoaluminate cement or any mixture thereof.

In embodiments, the hydraulic binder component comprises 2 wt.-% to 20 wt.-% of alumina cement based on the total weight of the hydraulic binder component.

In embodiments, the binder composition further comprises a flux, and optionally wherein the flux is finely ground limestone and/or dolomite.

In embodiments, setting retardants, setting accelerators, superplasticizers and the like may be added to adjust the setting, viscosity and the like.

A second aspect of the present invention relates to a method for the production of metal ore pellets comprising mixing finely ground ore or an ore concentrate with a binder composition of any of the preceding claims; and pelletizing the resulting mixture in a pelletizing disk or a drum agglomerator, or the like.

In embodiments, the binder composition is present in an amount of 2 wt.-% to 12 wt.-%, preferably 4 wt.-% to 8 wt.-% based on the total weight of the dry pellet. Dry pellet means dry iron ore + hydraulic binder + dry basis of additives.

In embodiments, the ore has a water content of 3 wt.-% to 15 wt.-%, based on the weight of the ore before mixing.

In embodiments, anthracite or other carbon sources are added to the ore before or during pelletising.

In embodiments the binder composition may be added mixed with water as a slurry.

In embodiments setting retardants, setting accelerators, superplasticizer or other known additives may be added to adjust the setting, viscosity and the like. In embodiments, anthracite or other carbon sources are added to the ore.

In embodiments, the binder composition as a dry powder or a slurry mixed with water is injected or sprayed onto a conveyor belt carrying the iron ore or ore concentrate, or to the agglomeration device or injected or sprayed onto iron ore feed to the pelletizing disc or other agglomeration devices.

In embodiments, water is injected or sprayed onto the mixture of iron ore and binder thereby regular pellets, in shape and size, can be formed.

In embodiments, the pellets are cured at a temperature above 5°C in a humid atmosphere having an r.h. above 90%, optionally for a period of 2 hours to 2 days after pelletising.

A third aspect of the present invention relates to metal ore pellets produced according to the aforesaid method with an aforesaid binder composition.

The invention is further explained by means of different embodiments and accompanying drawings showing:
- Figure 1:: a schematic diagram showing the inventive process in comparison to processes known in the art;
- Figure 2:: a table showing the chemical analysis of examples according to the invention and comparative examples;
- Figure 3:: a table showing the clinker mineral analysis of examples according to the invention and comparative examples;
- Figure 4:: the fineness of hydraulic binder examples according to the invention and comparative examples;
- Figure 5:: the compression strength of pellets made according to the invention with binders according to the invention;
- Figure 6:: the compression strength of comparative examples of pellets.

For the preparation of the binder composition a hydraulic binder is selected from any hydraulic binder as long as the fineness meets D95 < 40 µm, D50 < 12 µm, D10< 5 µm and the content of CaO is above 62,5 wt.-% and the content of C3S is > 60 wt.-%, preferably >65 wt.-%.. This hydraulic binder may be selected from CEM I or other cements e.g. CEM II, CEM III, calcium-aluminate-cement or calcium-sulfoaluminate-cement or any mixture thereof as long as the above criteria is met.

The D10 corresponds to the 10th centile of the volume distribution of particle sizes, i.e. 10% of the volume consists of particles for which the size is less than D10 and 90% with a size greater than D10. The D50 corresponds to the median or 50th centile of the volume distribution of particle sizes, i.e. 50% of the volume consists of particles for which the size is less than D50 and 50% with a size greater than D50. The D95 corresponds to the 95th centile of the volume distribution of particle sizes, i.e. 90% of the volume consists of particles for which the size is less than D95 and 10% with a size greater than D95.

The D10, D50, and D95 of particles is generally determined by laser diffraction. The particle size distribution of the different powders are obtained with a laser Malvern MS2000 granulometer. The measurement is carried out in a suitable medium (for example, in an aqueous medium); the size of the particles should be comprised between 0.02 µm and 2 mm. The light source consists of a red He-Ne laser (632 nm) and a blue diode (466 nm). The optical model is the Fraunhofer one, the computation matrix is of the polydisperse type.

A measurement of background noise is first of all carried out with a pump rate of 2000 rpm, a stirring rate of 800 rpm and a measurement of noise over 10 s, in the absence of ultrasonic waves. It is then checked that the light intensity of the laser is at least equal to 80%, and that a decreasing exponential curve is obtained for the background noise. If this is not the case, the lenses of the cell have to be cleaned.

A first measurement is then carried out on the sample with the following parameters: pump rate of 2000 rpm, stirring rate of 800 rpm, absence of ultrasonic waves, obscuration limit between 10 and 20%. The sample is introduced in order to have an obscuration slightly greater than 10%. After stabilization of the obscuration, the measurement is carried out with a duration between the immersion and the measurement set to 10 s. The measurement duration is of 30 s (30000 analyzed diffraction images). In the obtained granulogram, the fact that a portion of the population of the powder may be agglomerated should be taken into account.

Next a second measurement (without emptying the tank) is then carried out with ultrasonic waves. The pump rate is brought to 2500 rpm, the stirring to 1000 rpm, the ultrasonic waves are 100% emitted (30 Watts). This rate is maintained for 3 minutes, and then one returns to the initial parameters: pump rate 2000 rpm, stirrer rate of 800 rpm, absence of ultrasonic waves. After 10 s (for removing the possible air bubbles), a measurement is made for 30 s (30000 analyzed images). This second measurement corresponds to a powder de-agglomerated by ultrasonic dispersion.

Each measurement is repeated least twice in order to check the stability of the result. The apparatus is calibrated before each working session by means of a standard sample (silica C10 Sifraco) the grain size curve of which is known. All the measurements shown in the description and the announced ranges correspond to the values obtained with ultrasonic waves.

Preferably the following criteria are met as well: Al₂0₃ > 4 wt.-%; Fe₂O₃ < 3 wt.-%; SO₃ > 3.5 wt.-%; C3A > 2 wt-% (By XRD- Rietveld analysis); C4AF < 11% wt.-% (By XRD- Rietveld analysis).

Preferably the binder composition is a ready engineered ready-to-use composition comprising the aforesaid hydraulic binder as a main constituent and possibly additives.

For this purpose the hydraulic binder is admixed with the additives. Main additives are alkanolamines and/or gypsum and/or iron sulfate. If liquid additives are used they can be added to a grinding step of the clinker or other solid constituents of the hydraulic binder.

Alkanolamines may be added in amounts of 0.1 wt.-% to 1 wt.-%, Gypsum in amounts of 0.5wt.-% to 10wt-% (additional to the source of calcium sulfate which is part of the hydraulic binder) and iron sulphate in amounts from 0.1wt.-% to 3wt.-% based on the total weight of the hydraulic binder component. Although one of these additives may lead to sufficient strength of the binder after hydration, any mixture of these additives is suitable as well.

Further, the hydraulic binder may comprise aluminate cement, wherein the aluminate cement may be any calcium aluminate cement, or any calcium sulfoaluminate cement or any mixture thereof. In particular comprised in amounts from 2 wt.-% to 20 wt.-% of the total binder.

Other suitable additives can be calcium and magnesium chlorides, sodium sulfoaluminates, CSH seeds, carboxymethyl cellulose and vinyl copolymers.

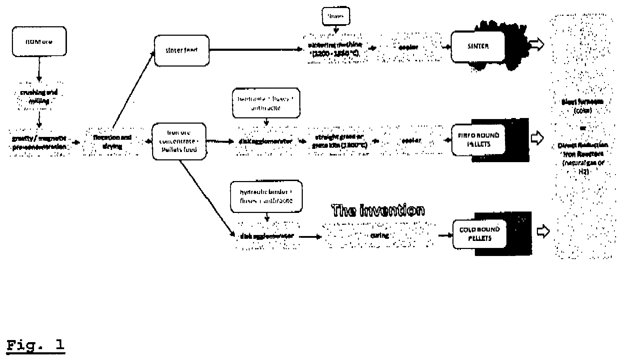

Although Fig. 1 relates to iron ore, the invention can successfully be applied to other metal ores, such as for example copper ore.

As apparent from Fig. 1 iron ore is ground and processed e.g. into an iron ore concentrate. Preferably, the water content in the concentrate is adjusted to a content of 3 wt-% to 12 wt.-% based on the weight of the ore. The water content should be adapted to the fineness of the ore as well as the fineness of the binder composition. The latter may be adapted to the fineness of the ore and the kind of iron ore. The finer the ore the more binder is needed.

As hematite ore leads to pellets with a higher compressive strength in relation to magnetite ore the latter has to have an increased fineness and needs more binder. This requires a higher amount of water. If the ore has a water content below this threshold water may be added. In case the water content is higher, the ore can be partially dried to the desired water content.

The ore concentrate is supplied to an agglomeration device which may be a disc agglomerator/pelletiser or any other suitable and well known device for the processing of fine ground raw materials into pellets.

The binder composition may be applied on the iron ore while it is being supplied to the pelletiser or in the pelletiser. To avoid setting before the pellets are formed in the pelletiser device the binder composition preferably is added just before the pelletising process.

Additional water and/or liquid pelletising agents may be applied to the ore/binder mixture to ensure the pellets of regular shape and size are formed. The additional water may be calculated in respect of the water content of the ore. Preferred pellet sizes are from 10 mm to 15 mm. Setting retardants like e.g. carboxymethylhydroxyethylcellulose, setting and/or hardening accelerators, superplasticizers like e.g. sodium citrate or other known additives may be added to adjust the setting, hardening, the viscosity and the like.

The binder is added in an amount of 2 to 12 wt.-% of the total weight of the pellet, preferably 4 to 8 wt.- % of the total weight of the pellet (ore + binder + optional additives).

The pellets are cured afterwards for 2 to 7 days. During curing the temperature should not fall below 5°C and the relative humidity should be above 90% r.h., preferably at 100% r.h.

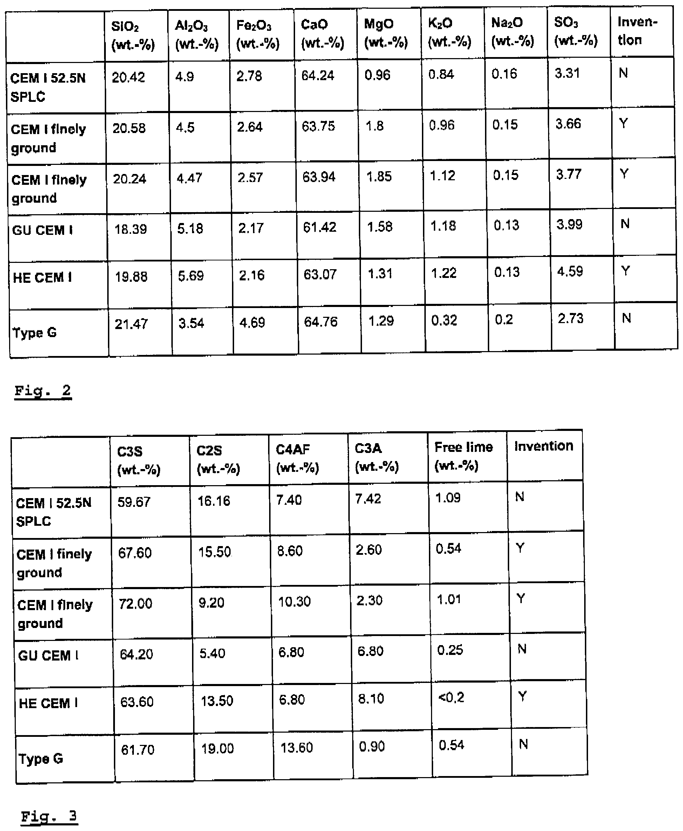

In Figure 2 a table shows the chemical analysis of examples of hydraulic binders according to the invention and comparative examples. Except of GU CEM I they all fulfill the criteria pertaining to the content of CaO.

In Figure 3 the respective analysis with regard to the clinker minerals is shown. As is can be derived from the table except from CEM I 52,5 they all meet the criteria of the content of C3S.

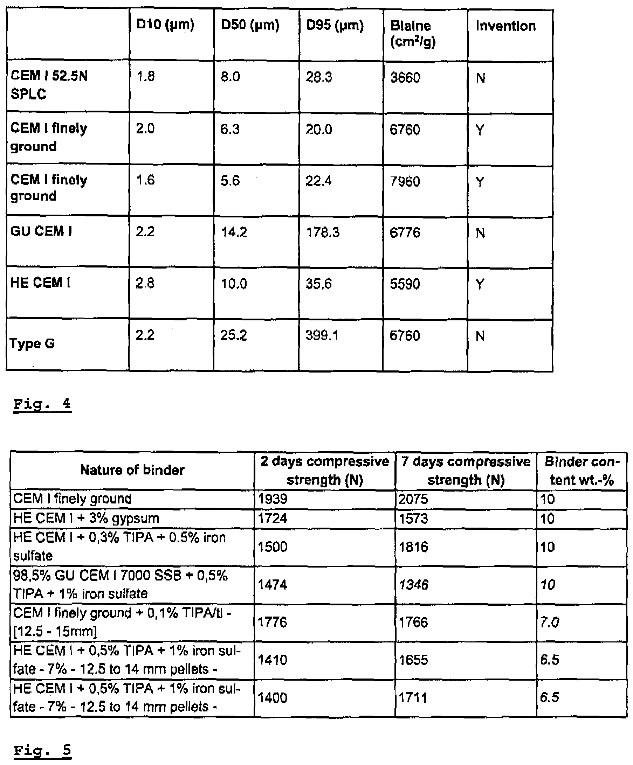

In Figure 4 the particle distribution as well as the surface in Blaine is shown. The criteria with regard to the particle distribution is not met by the non-inventive examples GU CEM I and Type G although they meet the criteria in regard to the surface. CEM I 52,5N does not meet the criteria in regard to the surface but of course the particle distribution.

Figure 5 shows examples of the compressive strength of pellets made according to the invention with the binder composition of the invention. All examples show a sufficient compressive strength after 2 and 7 days.

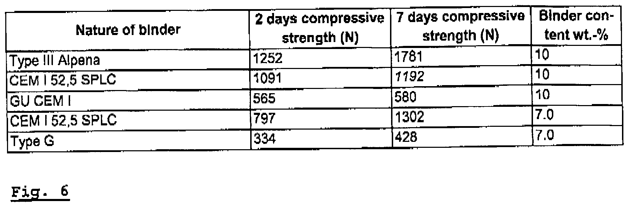

In Figure 6 the comparative examples are shown. The pellets made with the binder compositions which are not meeting the criteria fail to have sufficient compressive strength. In contrary to common knowledge it is not sufficient to have a finely ground hydraulic binder to achieve sufficient strength of pellets. Even if the particle size distribution or the surface meet the criteria both have to be fulfilled. Besides the particle size and the surface criteria if the CaO content or the content of C3S is not sufficient the compressive strength will fail to be sufficiently high.

## Claims

1. A binder composition for the cold forming of metal ore pellets, wherein the binder composition comprises a hydraulic binder component and additives, wherein the hydraulic binder component has a fineness of at least D95 < 40 µm, D50 < 12 µm, D10< 5 µm (determined by laser diffraction particle size analyzer) with a Blaine fineness between 6500 and 9000 cm²/g wherein the CaO content is > 62,5 wt.-% and the content of C3S is > 60 wt.-%, preferably >65 wt.-%,

2. The binder composition of claim 1, wherein the hydraulic binder component comprises alkanolamines in an amount of 0,1 wt.-% to 1 wt-% and/or gypsum in amounts from 0.5 wt.-% and 10 wt.-% based on the weight of the total hydraulic binder component.

3. The binder composition of claim 1 or 2, wherein the hydraulic binder is further **characterized in that**: Al₂0₃> 4 wt.-%; Fe₂O₃ < 3 wt.-%; SO₃ > 3.5 wt.-%; C3A > 2 wt.-% (by XRD- Rietveld analysis); C4AF < 11% wt.-% (by XRD-Rietveld analysis).

4. The binder composition of any of the preceding claims, wherein the binder composition comprises as an additive one or more from the group comprising alkanolamines, calcium aluminate cement, iron sulfate, calcium and magnesium chlorides, sodium sulfoaluminates, CSH seeds, carboxymethyl cellulose, carboxymethylhydroxyethylcellulose, vinyl copolymers, Sodium citrate, sodium gluconate, disodium salt of ethylenediamine tetra acetic acid, melamine and naphthalene formaldehyde condensates, Lignosulfonates, set retardants, superplasticizer, CSH seeds, fluxes, or any mixture thereof.

5. The binder composition of any of the preceding claims, wherein the hydraulic binder component comprises aluminate cement, wherein the aluminate cement is optionally selected from any calcium aluminate cement, any calcium sulfoaluminate cement or any mixture thereof, wherein the hydraulic binder component comprises 2 wt.-% to 20 wt.-% of alumina cement based on the total weight of the hydraulic binder component.

6. The binder composition of any of the preceding claims, wherein the binder composition further comprises a flux, and optionally wherein the flux is finely ground limestone and/or dolomite.

7. The binder composition of any of the preceding claims, wherein setting retardants, setting accelerators, superplasticizers may be added to adjust the setting, viscosity and the like.

8. A method for the production of metal ore pellets comprising mixing finely ground ore or an ore concentrate with a binder composition of any of the preceding claims; and pelletizing the resulting mixture in a pelletizing disk or a drum agglomerator, or the like.

9. The method of claim 8, wherein the binder composition is present in an amount of 2 wt.-% to 12 wt.-%, preferably 4 wt.-% to 8 wt.-% based on the total weight of the dry pellet.

10. The method of claim 8 or 9, wherein the ore has a water content of 3 wt.-% to 15 wt.-%, based on the weight the ore before mixing.

11. The method of any of claims 8 to 10, wherein anthracite or other carbon sources are added to the ore before or during pelletising.

12. The method of any of claims 8 to 11, further comprising spreading the binder composition as a dry powder or a slurry mixed with water onto a conveyor belt carrying the iron ore or ore concentrate, or to the agglomeration device or injected or sprayed onto iron ore feed to the pelletizing disc or other agglomeration devices.

13. The method of any of claims 8 to 12, further comprising injecting water onto the mixture of iron ore and binder in such a way that regular pellets, in shape and size can be formed.

14. The method of any of claims 8 to 13, further comprising curing the pellets at a temperature above 5°C in a humid atmosphere having a r.h. above 90% , for a period of 2 to 7 days after pelletising.

15. A metal ore pellet produced according to the method of any of claims 8 to 14
